# EUROPÄISCHE PATENTSCHRIFT

(11) **EP 3 963 027 B1**
(45) Veröffentlichungstag und Bekanntmachung des Hinweises auf die Patenterteilung: **28.08.2024**
(21) Anmeldenummer: 20723113.5
(22) Anmeldetag: 30.04.2020
(51) Int. Cl.: C09K 21/02, C09K 21/04, C11C 5/00, F21V 37/00

(54) **BORFREIER DOCHT UND VERFAHREN ZU DESSEN HERSTELLUNG**
BORON-FREE WICK AND METHOD TO PREPARE
MÈCHE SANS BORE ET PROCEDE DE SA PREPARATION

(30) Priorität: 30.04.2019 EP 19171887
(43) Veröffentlichungstag der Anmeldung: 09.03.2022
(73) Patentinhaber: Schreiber GmbH, 36119 Neuhof (DE)
(72) Erfinder: STAUBACH, Carsten, 36119 Neuhof (DE); STAUBACH, Lukas, 36119 Neuhof (DE); STAUBACH, Norbert, 36119 Neuhof (DE)
(74) Vertreter: Aera A/S
(86) Internationale Anmeldenummer: PCT/EP2020/062080
(87) Internationale Veröffentlichungsnummer: WO 2020/221881

(56) Entgegenhaltungen:
- WO-A1-2017/220410
- WO-A1-96/00763
- WO-A1-97/35819
- CN-A- 101 094 952
- CN-A- 101 451 091
- CN-A- 101 880 204
- CN-A- 104 327 862
- CN-A- 105 541 434
- CN-A- 107 937 145
- CN-A- 110 064 159
- DE-A1- 1 444 052
- US-A- 3 291 560
- US-A- 3 940 233
- US-A1- 2010 239 642
- US-B1- 9 920 250

## Beschreibung

Die vorliegende Erfindung betrifft einen borfreien Docht sowie eine Kerze, die einen erfindungsgemäßen Docht umfasst. Weiterhin betrifft die Erfindung ein Verfahren zur Imprägnierung eines Dochts mit einer Tränklösung.

Dochte für Kerzen müssen verschiedene Eigenschaften in sich vereinen. Einerseits müssen Sie ein gutes Abbrennverhalten zeigen, wobei sie jedoch nicht zu schnell verglühen dürfen. Andererseits muss der Krümmungswinkel des Dochtes in einem vorgegebenen Bereich liegen, um entsprechende Flammengrößen und -formen hervorzurufen.

Um diese Eigenschaften zu erreichen, werden den Dochten verschiedene Substanzen zugefügt, die Einfluss auf das Abbrennverhalten haben. Ein wichtiger Bestandteil ist hierbei ein Flammschutzmittel, welches ein zu schnelles Abbrennen verhindert. Weiterhin werden Substanzen verwendet, die die weiteren Eigenschaften des Dochtes beeinflussen. Wichtig ist vorliegend das Zusammenspiel aller Komponenten, um einen Docht zu erhalten, der eine entsprechende Krümmung und ein vorteilhaftes Abbrennverhalten aufweist.

WO97/35819A1 offenbart borfreie Dochte und Verfahren zu deren Herstellung.

Aus dem Stand der Technik sind Bor-enthaltende Substanzen wie Borsäure, Borate oder auch Borax bekannt, welche als Flammschutzmittel eingesetzt werden. Diese Substanzen rufen ein vorteilhaftes Abbrennverhalten des Dochtes hervor. Ebenso hat der Docht eine vorteilhafte Krümmung.

Borate und insbesondere Borax können negativen Einfluss auf die Gesundheit haben und werden als fortpflanzungsgefährdend eingestuft. Das heißt Dochte, die mit solchen Substanzen imprägniert, das heißt getränkt wurden, sind gegenwärtig nicht mehr wünschenswert.

Es ist daher von Interesse Präparationslösungen, auch als Tränklösungen bezeichnet, für Dochte bereitzustellen, die gesundheitlich unbedenklich sind und trotzdem die vorteilhaften Abbrenn- und Krümmungseigenschaften von herkömmlichen Dochten, die Bor und insbesondere Borate enthalten, aufweisen.

Es ist daher die Aufgabe der vorliegenden Erfindung Tränklösungen für Dochte und Dochte, die borfrei sind, bereitzustellen. Gleichzeitig ist es Aufgabe, Dochte mit guten Abbrenneigenschaften und gutem Krümmungsverhalten bereitzustellen.

Die vorliegende Aufgabe wird durch einen borfreien Docht gemäß Anspruch 1 gelöst. Ebenso betrifft die vorliegende Erfindung Kerzen gemäß Anspruch 6, die den erfindungsgemäßen Docht umfassen.

Ein weiterer Gegenstand der Erfindung betrifft ein Verfahren gemäß Anspruch 8, welches zur Imprägnierung, das heißt Tränkung von Dochten mit einer Tränklösung, eingesetzt wird.

Vorliegend ist eine borfreie Tränklösung, die nicht Teil der Erfindung ist, für einen Docht gezeigt, umfassend, vorzugsweise enthaltend,
a) ein Lösungsmittel;
b) wenigstens ein erstes Flammschutzmittel; und
c) wenigstens ein erstes Additiv, wobei das erste Additiv ausgewählt ist aus der Gruppe bestehend aus Ammoniumnitrat, Cernitrat, einem Polymer oder Kombinationen daraus.

Tränklösungen werden auch als Präparationslösungen bezeichnet.

Die Tränklösung verzichtet auf den Zusatz von Bor-enthaltenden Substanzen speziell Borate und hier insbesondere Borax. Borate und insbesondere Borax werden auf einer Liste für besonders besorgniserregende Substanzen geführt.

Ebenso ist die erfindungsgemäße Tränklösung umweltfreundlich und erlaubt den Verzicht auf einen Gefahrstoff. Zudem ist die Tränklösung teilweise biologisch abbaubar. Weiterhin beeinflusst die borfreie Tränklösung das Abbrennverhalten von Dochten positiv.

Vorzugweise ist das Lösungsmittel der borfreien Tränklösung Wasser. Wird Wasser als Lösungsmittel verwendet kann dieses Spuren an darin gelösten Substanzen enthalten. Vorzugsweise wird demineralisiertes Wasser als Lösungsmittel verwendet.

Weiterhin wird in der borfreien Tränklösung wenigstens ein erstes Flammschutzmittel eingesetzt. Ein Flammschutzmittel verhindert das Zersetzen des Dochtes. Unter dem Zersetzen wird hierbei das sogenannte Abglühen, das heißt das Verglühen des Dochtes beim Abbrennen der Kerze, verstanden. Das Flammschutzmittel ist gemäß der vorliegenden Erfindung daher unter anderem für das vorteilhafte Abbrennverhalten verantwortlich, wobei gleichzeitig auf gesundheitsgefährdende Bor-enthaltende Substanzen verzichtet werden kann.

Flammschutzmittel im Sinne der Erfindung sind alle dem Fachmann bekannten Flammschutzmittel, die für die Verwendung in Tränklösungen in Dochten geeignet und borfrei sind.

Vorzugweise wird das wenigstens eine erste Flammschutzmittel ausgewählt aus der Gruppe bestehend aus anorganischen phosphorenthaltenden Substanzen, Phosphaten, organischen Phosphorverbindungen, Stickstoffverbindungen, Kieselsäure und Kombinationen daraus. Bevorzugt ist das wenigstens eine Flammschutzmittel eine phosphorenthaltende anorganische Substanz.

Die Phosphate sind vorzugweise ausgewählt aus anorganischen und organischen Phosphaten, bevorzugter aus Dihydrogenphosphaten, Hydrogenphosphaten, Polyphosphaten und/oder Kombinationen daraus, noch bevorzugter aus Ammonium-Dihydrogenphosphat, Ammonium-Polyphosphat und/oder Kombinationen daraus.

Besonders bevorzugt ist das wenigstens eine erste Flammschutzmittel Polyphosphorsäure und/oder Polyphosphat und am bevorzugtesten Ammonium-Polyphosphat.

Die organischen Phosphorverbindungen sind vorzugsweise Ammoniumsalze organischer Phosphorverbindungen.

Die Stickstoffverbindungen sind vorzugsweise ausgewählt aus anorganischen Stickstoffverbindungen, organischen Stickstoffverbindungen und/oder Kombinationen daraus, bevorzugt aus anorganischen Stickstoffverbindungen.

Weiterhin umfasst die Tränklösung vorzugsweise ein anorganisches Sulfat, ausgewählt aus der Gruppe bestehend aus Lithiumsulfat, Berylliumsulfat, Natriumsulfat, Ammoniumsulfat, Magnesiumsulfat, Aluminiumsulfat, Kaliumsulfat und Calciumsulfat. Vorzugsweise ist das anorganische Sulfat ausgewählt aus der Gruppe bestehend aus Natriumsulfat, Magnesiumsulfat oder Ammoniumsulfat, bevorzugter ist das anorganische Sulfat Ammoniumsulfat.

Bevorzugt enthält die Tränklösung Schwefelsäure.

Weiter bevorzugt enthält die Tränklösung anorganisches Sulfat, anorganisches Hydrogensulfat und/oder Schwefelsäure.

Gemäß einer vorteilhaften Ausführungsform umfasst, vorzugsweise besteht aus, die borfreie Tränklösung für einen Docht,
a) ein Lösungsmittel;
b) wenigstens ein erstes Flammschutzmittel;
c) wenigstens ein erstes Additiv, wobei das erste Additiv ausgewählt ist aus der Gruppe bestehend aus Ammoniumnitrat, Cernitrat, einem Polymer oder Kombinationen daraus; und
d) ein anorganisches Sulfat, ausgewählt aus der Gruppe bestehend aus Lithiumsulfat, Berylliumsulfat, Natriumsulfat, Ammoniumsulfat, Magnesiumsulfat, Aluminiumsulfat, Kaliumsulfat und Calciumsulfat.

Weiterhin umfasst die borfreie Tränklösung wenigstens ein erstes Additiv. Das erste Additiv kann ausgewählt werden aus der Gruppe bestehend aus Ammoniumnitrat, Cernitrat, Kaliumnitrat, Magnesiumhydroxid, Ammoniumhydroxid, Aluminiumhydroxid, Harnstoff, einem Polymer oder Kombinationen daraus. Bevorzugt ist das wenigstens eine erste Additiv ausgewählt aus Ammoniumnitrat oder Cernitrat, bevorzugter ist das erste Additiv Cernitrat.

Wenn das erste Additiv ein Polymer ist, dann ist das Polymer bevorzugt ein organisches Polymer. Vorzugsweise ist das organische Polymer ein Polyethylenglykol, ein Polyacrylat oder ein vinylbasiertes Polymer. Die Polymere können Homo- oder Copolymere sein und können weitere Monomere enthalten, wie zum Beispiel ein- oder zweifach ungesättigte Monomere wie Ethylen, Propylen und/oder Butadien.

Das Polymer kann auch multivalent sein, bevorzugt ist das Polymer di-, tri- und/oder tetravalent.

Gemäß einer weiteren Ausführungsform umfasst die Tränklösung ein zweites Flammschutzmittel, welches aus den vorgenannten Flammschutzmitteln ausgewählt werden kann. Das wenigstens eine erste und das zweite Flammschutzmittel sind in diesem Falle voneinander verschieden.

Vorzugsweise enthält die borfreie Tränklösung ein zweites Additiv, wobei das zweite Additiv ein anorganisches Nitrat ist, bevorzugt ist das zweite Additiv ausgewählt aus der Gruppe bestehend aus Ammoniumnitrat oder Cernitrat, wobei das zweite Additiv vom ersten Additiv verschieden ist. Bevorzugter ist das das zweite Additiv Ammoniumnitrat.

Gemäß einer bevorzugten Ausführungsform ist das wenigstens eine erste Additiv Cernitrat und das zweite Additiv ist Ammoniumnitrat.

Weiterhin bevorzugt enthält die Tränklösung ein weiteres, drittes Additiv. Vorzugsweise ist das dritte Additiv ausgewählt aus der Gruppe bestehend aus Magnesiumhydroxid, Ammoniumhydroxid, Aluminiumhydroxid, Harnstoff, Schwefel, organischen Schwefelverbindungen, anorganischen Schwefelverbindungen und/oder Kombinationen hieraus, bevorzugter ausgewählt aus der Gruppe bestehend aus Schwefel, organischen Schwefelverbindungen und anorganischen Schwefelverbindungen und noch bevorzugter ist das dritte Additiv Schwefel.

Die Tränklösung kann noch weitere Additive enthalten.

Vorzugsweise beträgt der Anteil an anorganischem Sulfat von 0,1 bis 20 Gew.%, bevorzugt 0,1 bis 10 Gew.%, bevorzugter von 0,3 bis 9 Gew.%, noch bevorzugter von 0,3 bis 6,0 Gew.% und noch bevorzugter 0,4 bis 4,0 Gew.% bezogen auf die Gesamtmenge der borfreien Tränklösung.

Gemäß einer vorteilhaften Ausführungsform umfasst, vorzugsweise besteht aus, die borfreie Tränklösung für einen Docht,
a) ein Lösungsmittel;
b) wenigstens ein erstes Flammschutzmittel;
c) wenigstens ein erstes Additiv, wobei das erste Additiv ausgewählt ist aus der Gruppe bestehend aus Ammoniumnitrat, Cernitrat, einem Polymer oder Kombinationen daraus; und
d) ein anorganisches Sulfat, ausgewählt aus der Gruppe bestehend aus Lithiumsulfat, Berylliumsulfat, Natriumsulfat, Ammoniumsulfat, Magnesiumsulfat, Aluminiumsulfat, Kaliumsulfat und Calciumsulfat, wobei der Anteil an anorganischem Sulfat von 0,1 bis 20 Gew.%, bevorzugt 0,3 bis 9 Gew.% und bevorzugter 0,4 bis 4,0 Gew.% bezogen auf die Gesamtmenge der Tränklösung beträgt.

Weiterhin bevorzugt beträgt der Anteil an erstem Additiv 0,1 bis 10 Gew.%, bevorzugt 0,1 bis 4,0 Gew.%, bevorzugter 0,15 bis 3,8 Gew.% und noch bevorzugter 0,2 bis 3,6 Gew.% bezogen auf die Gesamtmenge der Tränklösung.

Gemäß einer weiteren vorteilhaften Ausführungsform umfasst, vorzugsweise besteht aus, die borfreie Tränklösung für einen Docht,
a) ein Lösungsmittel;
b) wenigstens ein erstes Flammschutzmittel; und
c) wenigstens ein erstes Additiv, wobei das erste Additiv ausgewählt ist aus der Gruppe bestehend aus Ammoniumnitrat, Cernitrat, einem Polymer oder Kombinationen daraus, wobei der Anteil an erstem Additiv 0,1 bis 10 Gew.%, bevorzugt 0,1 bis 4,0 Gew.% und bevorzugter 0,2 bis 3,6 Gew.% bezogen auf die Gesamtmenge der Tränklösung beträgt.

In einer weiteren vorteilhaften Ausführungsform umfasst, vorzugsweise besteht aus, die borfreie Tränklösung für einen Docht,
a) ein Lösungsmittel;
b) wenigstens ein erstes Flammschutzmittel;
c) wenigstens ein erstes Additiv, wobei das erste Additiv ausgewählt ist aus der Gruppe bestehend aus Ammoniumnitrat, Cernitrat, einem Polymer oder Kombinationen daraus, wobei der Anteil an erstem Additiv 0,1 bis 10 Gew.%, bevorzugt 0,1 bis 4,0 Gew.% und bevorzugter 0,2 bis 3,6 Gew.% bezogen auf die Gesamtmenge der Tränklösung beträgt; und
d) ein anorganisches Sulfat, ausgewählt aus der Gruppe bestehend aus Lithiumsulfat, Berylliumsulfat, Natriumsulfat, Ammoniumsulfat, Magnesiumsulfat, Aluminiumsulfat, Kaliumsulfat und Calciumsulfat, wobei vorzugsweise der Anteil an anorganischem Sulfat von 0,1 bis 20 Gew.%, bevorzugt 0,3 bis 9 Gew.% und bevorzugter 0,4 bis 4,0 Gew.% bezogen auf die Gesamtmenge der Tränklösung beträgt.

Ein Gegenstand der Erfindung betrifft einen erfindungsgemäßen borfreien Docht umfassend, vorzugsweise bestehend aus,
a) ein Dochtmaterial, wobei das Dochtmaterial ausgewählt ist aus Baumwolle, Zellwolle, Zellulosefasern, Papiergarn, Leinengarn und/oder Kombinationen daraus;
b) wenigstens ein erstes Flammschutzmittel; und
c) wenigstens ein erstes Additiv, wobei das erste Additiv ausgewählt ist aus der Gruppe bestehend aus Ammoniumnitrat, Cernitrat, einem Polymer oder Kombinationen daraus,
wobei der Anteil an erstem Additiv 0,001 bis 4,0 Gew.% bezogen auf die Gesamtmenge des Dochts beträgt.

Der Docht besteht aus einem Dochtmaterial. Dieses Dochtmaterial bildet das Basismaterial und wird mit der Tränklösung getränkt. Als Dochtmaterial kommen alle dem Fachmann bekannten Materialien in Betracht. Vorzugweise ist das Dochtmaterial ausgewählt aus Baumwolle, Zellwolle, Zellulosefasern, Papiergarn, Leinengarn und/oder Kombinationen daraus.

Vorzugsweise wird der borfreie Docht durch Imprägnieren eines Dochtmaterials mit der Tränklösung erhalten.

Nach dem Trocknen wird ein borfreier Docht erhalten, der frei von Wasser ist, aber die in der Tränklösung enthaltenen Substanzen umfasst.

Die oben gemachten Angaben zur Tränklösung haben entsprechend auch für den borfreien Docht Geltung.

Der borfreie Docht umfasst wenigstens ein erstes Flammschutzmittel.

Erfindungsgemäße Flammschutzmittel sind alle dem Fachmann bekannten Flammschutzmittel, die für die Verwendung in Dochten geeignet sind und borfrei sind.

Vorzugweise wird das wenigstens eine erste Flammschutzmittel ausgewählt aus der Gruppe bestehend aus anorganischen phosphorenthaltenden Substanzen, Phosphaten, organischen Phosphorverbindungen, Stickstoffverbindungen, Kieselsäure und Kombinationen daraus. Bevorzugt ist das wenigstens eine Flammschutzmittel eine phosphorenthaltende anorganische Substanz.

Die Phosphate sind vorzugweise ausgewählt aus anorganischen und organischen Phosphaten, bevorzugter aus Dihydrogenphosphaten, Hydrogenphosphaten, Polyphosphaten und/oder Kombinationen daraus, noch bevorzugter aus Ammonium-Dihydrogenphosphat, Ammonium-Polyphosphat und/oder Kombinationen daraus. Besonders bevorzugt ist das wenigstens eine Flammschutzmittel Polyphosphorsäure und/oder Polyphosphat und am bevorzugtesten Ammonium-Polyphosphat.

Die organischen Phosphorverbindungen sind vorzugsweise Ammoniumsalze organischer Phosphorverbindungen.

Die Stickstoffverbindungen sind vorzugsweise ausgewählt aus anorganischen Stickstoffverbindungen, organischen Stickstoffverbindungen und/oder Kombinationen daraus, bevorzugt aus anorganischen Stickstoffverbindungen.

Weiterhin umfasst der erfindungsgemäße Docht vorzugsweise ein anorganisches Sulfat, ausgewählt aus der Gruppe bestehend aus Lithiumsulfat, Berylliumsulfat, Natriumsulfat, Ammoniumsulfat, Aluminiumsulfat, Magnesiumsulfat, Kaliumsulfat und Calciumsulfat. Vorzugsweise ist das anorganische Sulfat ausgewählt aus der Gruppe bestehend aus Natriumsulfat, Magnesiumsulfat oder Ammoniumsulfat, bevorzugter ist das anorganische Sulfat Ammoniumsulfat.

Weiter bevorzugt enthält der erfindungsgemäße Docht anorganisches Sulfat, anorganisches Hydrogensulfat und/oder Schwefelsäure. Vorzugsweise enthält der Docht anorganisches Sulfat und/oder anorganisches Hydrogensulfat.

Bevorzugt ist der Anteil an anorganischem Sulfat von 0,001 bis 10 Gew.%, bevorzugt 0,01 bis 5 Gew.% und bevorzugter 0,1 bis 2,5 Gew.% bezogen auf die Gesamtmenge des Dochts beträgt.

Gemäß einer vorteilhaften Ausführungsform umfasst, vorzugsweise besteht aus, der borfreie Docht,
a) ein Dochtmaterial, wobei das Dochtmaterial ausgewählt ist aus Baumwolle, Zellwolle, Zellulosefasern, Papiergarn, Leinengarn und/oder Kombinationen daraus;
b) wenigstens ein erstes Flammschutzmittel;
c) wenigstens ein erstes Additiv, wobei das erste Additiv ausgewählt ist aus der Gruppe bestehend aus Ammoniumnitrat, Cernitrat, einem Polymer oder Kombinationen daraus, wobei der Anteil an erstem Additiv 0,001 bis 4,0 Gew.% bezogen auf die Gesamtmenge des Dochts beträgt; und
d) ein anorganisches Sulfat, ausgewählt aus der Gruppe bestehend aus Lithiumsulfat, Berylliumsulfat, Natriumsulfat, Ammoniumsulfat, Magnesiumsulfat, Aluminiumsulfat, Kaliumsulfat und Calciumsulfat.

Weiterhin umfasst der erfindungsgemäße borfreie Docht wenigstens ein erstes Additiv. Das erste Additiv kann ausgewählt werden aus der Gruppe bestehend aus Ammoniumnitrat, Cernitrat, einem Polymer oder Kombinationen daraus. Bevorzugt ist das wenigstens eine erste Additiv ausgewählt aus Ammoniumnitrat oder Cernitrat, bevorzugter ist das erste Additiv Cernitrat.

Wenn das erste Additiv ein Polymer ist, dann ist das Polymer bevorzugt ein organisches Polymer. Vorzugsweise ist das organische Polymer ein Polyethylenglykol, ein Polyacrylat oder ein vinylbasiertes Polymer. Die Polymere können Homo- oder Copolymere sein und können weitere Monomere enthalten, wie zum Beispiel ein- oder zweifach ungesättigte Monomere wie Ethylen, Propylen und/oder Butadien.

Das Polymer kann auch multivalent sein, bevorzugt ist das Polymer di-, tri- und/oder tetravalent.

Vorzugsweise beträgt der Anteil an erstem Additiv 0,01 bis 4,0 Gew.% und bevorzugt 0,1 bis 2,5 Gew.% bezogen auf die Gesamtmenge des Dochts.

Gemäß einer vorteilhaften Ausführungsform umfasst, vorzugsweise besteht aus, der borfreie Docht,
a) ein Dochtmaterial, wobei das Dochtmaterial ausgewählt ist aus Baumwolle, Zellwolle, Zellulosefasern, Papiergarn, Leinengarn und/oder Kombinationen daraus;
b) wenigstens ein erstes Flammschutzmittel;
c) wenigstens ein erstes Additiv, wobei das erste Additiv ausgewählt ist aus der Gruppe bestehend aus Ammoniumnitrat, Cernitrat, einem Polymer oder Kombinationen daraus, wobei der Anteil an erstem Additiv 0,001 bis 4 Gew.%, bevorzugt 0,01 bis 4,0 Gew.% und bevorzugter 0,1 bis 2,5 Gew.% bezogen auf die Gesamtmenge des Dochts beträgt; und
d) optional ein anorganisches Sulfat, ausgewählt aus der Gruppe bestehend aus Lithiumsulfat, Berylliumsulfat, Natriumsulfat, Ammoniumsulfat, Magnesiumsulfat, Aluminiumsulfat, Kaliumsulfat und Calciumsulfat, wobei vorzugsweise der Anteil an anorganischem Sulfat von 0,001 bis 10 Gew.%, bevorzugt 0,01 bis 5 Gew.% und bevorzugter 0,1 bis 2,5 Gew.% bezogen auf die Gesamtmenge der Tränklösung beträgt.

Gemäß einer weiteren Ausführungsform umfasst der Docht ein zweites Flammschutzmittel, welches aus den vorgenannten Flammschutzmitteln ausgewählt werden kann. Das wenigstens eine erste und das zweite Flammschutzmittel sind in diesem Falle voneinander verschieden.

Vorzugsweise enthält der borfreie Docht ein zweites Additiv, wobei das zweite Additiv ein anorganisches Nitrat ist, bevorzugt ist das zweite Additiv ausgewählt aus der Gruppe bestehend aus Ammoniumnitrat oder Cernitrat, wobei das zweite Additiv vom ersten Additiv verschieden ist. Bevorzugter ist das zweite Additiv Ammoniumnitrat.

Gemäß einer bevorzugten Ausführungsform ist das wenigstens eine erste Additiv Cernitrat und das zweite Additiv ist Ammoniumnitrat.

Weiterhin bevorzugt enthält der erfindungsgemäße Docht ein weiteres, drittes Additiv. Vorzugsweise ist das dritte Additiv ausgewählt aus der Gruppe bestehend aus Magnesiumhydroxid, Ammoniumhydroxid, Aluminiumhydroxid, Harnstoff, Schwefel, organischen Schwefelverbindungen, anorganischen Schwefelverbindungen und/oder Kombinationen hieraus, bevorzugter ausgewählt aus der Gruppe bestehend aus Schwefel, organischen Schwefelverbindungen und anorganischen Schwefelverbindungen und noch bevorzugter ist das dritte Additiv Schwefel.

Der erfindungsgemäße Docht kann noch weitere Additive enthalten.

Gemäß einer vorteilhaften Ausführungsform umfasst, vorzugsweise besteht aus, der borfreie Docht,
a) ein Dochtmaterial, wobei das Dochtmaterial ausgewählt ist aus Baumwolle, Zellwolle, Zellulosefasern, Papiergarn, Leinengarn und/oder Kombinationen daraus;
b) wenigstens ein erstes Flammschutzmittel;
c) wenigstens ein erstes Additiv, wobei das erste Additiv ausgewählt ist aus der Gruppe bestehend aus Ammoniumnitrat, Cernitrat, einem Polymer oder Kombinationen daraus, wobei der Anteil an erstem Additiv 0,001 bis 4,0 Gew.% bezogen auf die Gesamtmenge des Dochts beträgt; und
d) ein anorganisches Sulfat, ausgewählt aus der Gruppe bestehend aus Lithiumsulfat, Berylliumsulfat, Natriumsulfat, Ammoniumsulfat, Magnesiumsulfat, Aluminiumsulfat, Kaliumsulfat und Calciumsulfat, wobei der Anteil an anorganischem Sulfat von 0,001 bis 10 Gew.%, bevorzugt 0,01 bis 5 Gew.% und bevorzugter 0,1 bis 2,5 Gew.% bezogen auf die Gesamtmenge der Tränklösung beträgt.

Der erfindungsgemäße Docht kann auch noch ein Dochtwachs umfassen. Das Dochtwachs wird regelmäßig nach dem Imprägnieren und Trocknen außen auf den Docht aufgebracht.

Ein weiterer Gegenstand der Erfindung betrifft eine Kerze, die einen erfindungsgemäßen Docht umfasst.

Die oben gemachten Angaben zur erfindungsgemäßen Tränklösung und dem erfindungsgemäßen Docht haben entsprechend, soweit zutreffend, auch für die erfindungsgemäße Kerze Geltung.

Kerze im Sinne der Erfindung ist ein Kerzenmaterial, welches einen Docht umfasst.

Kerzenmaterialien im Sinne der Erfindung sind Substanzen, die als Hauptbrennmittel in einer Kerze eingesetzt werden. Die Kerzenmaterialien sind ausgewählt aus der Gruppe bestehend aus Paraffin, Stearin tierischer und/oder pflanzlicher Herkunft, Bienenwachs, Palmwachs, Sojawachs, Fette tierischer und/oder pflanzlicher Herkunft, und/oder Kombinationen hieraus. Die erfindungsgemäße Kerze kann somit auch aus verschiedenen Kerzenmaterialien hergestellt sein.

Weiterhin kann die erfindungsgemäße Kerze noch Zusatzstoffe wie Duftstoffe, Farbstoffe und/oder Kombinationen hieraus erhalten.

Die Kerze kann alle dem Fachmann bekannten Formen haben, insbesondere Teelicht, Stumpenkerze oder Stabkerze.

In Abhängigkeit des verwendeten Kerzenmaterials wird der erfindungsgemäße Docht ausgewählt. Die Abbrenneigenschaften und der Krümmungswinkel des Dochtes ergeben sich im Zusammenspiel mit dem jeweils verwendeten Kerzenmaterial.

Ein weiterer Gegenstand der Erfindung betrifft ein Verfahren zur Imprägnierung eines Dochts mit einer borfreien Tränklösung für einen Docht,
wobei die Tränklösung, ein Lösungsmittel, wenigstens ein erstes Flammschutzmittel und wenigstens ein erstes Additiv, wobei das erste Additiv ausgewählt ist aus der Gruppe bestehend aus Ammoniumnitrat, Cernitrat, einem Polymer oder Kombinationen daraus, und
wobei der Anteil an erstem Additiv der borfreien Tränklösung 0,1 bis 10 Gew.%, bezogen auf die Gesamtmenge der Tränklösung beträgt, umfasst;
umfassend die Schritte
   a) Durchführen des Dochtes durch die Tränklösung mit einer Geschwindigkeit von mindestens 100 m/min, bevorzugt 140 m/min und bevorzugter 180 m/min, wobei die Verweilzeit des Dochtes in der Tränklösung wenigstens 0,5 Sekunden oder mehr, bevorzugt 0,7 Sekunden oder mehr und bevorzugter 0,8 Sekunden oder mehr beträgt;
   b) Aufwickeln des getränkten Dochtes auf eine Trockenvorrichtung.

Durch das erfindungsgemäße Verfahren ist es möglich, verschiedenste Dochtmaterialien ausreichend mit einer Tränklösung zu durchtränken.

Das erfindungsgemäße Verfahren erlaubt eine verlängerte Verweilzeit des Dochtes in der Tränklösung. Hierdurch kann die Tränklösung besser in den Docht eindringen und ermöglicht ein besseres Abbrandverhalten. Durch das erfindungsgemäße Verfahren wird der Docht zudem schonender präpariert, das heißt durchtränkt.

Weiterhin bevorzugt ist die Durchführgeschwindigkeit in Schritt a) maximal 250 m/min, bevorzugt maximal 225 m/min und bevorzugter maximal 200 m/min. Vorzugsweise ist die Durchführgeschwindigkeit 190 m/min.

Vorzugsweise beträgt die Spannung des Dochtes in Schritt a) 0,1 kg bis 3,0 kg, bevorzugter 0,5 kg bis 2,5 kg und noch bevorzugter 1,0 kg bis 2,0 kg.

Vorzugsweise liegt in Schritt b) die relative Luftfeuchtigkeit zwischen 5 und 25%, bevorzugt zwischen 10 und 20% und bevorzugter zwischen 10 und 15%.

Die Trockendauer in Schritt b) beträgt mindestens 1h, bevorzugt mindestens 1,5h und bevorzugter mindestens 2h.

Vorzugsweise wird im Anschluss an den Trockenschritt c) der Docht gewachst. Hierdurch wird gewährleistet, dass der Docht bei der Kerzenproduktion in das Kerzenmaterial eingebracht werden kann und dieser beim Anzünden gleich mit Wachs versorgt wird.

Weiterhin kann vor Schritt a) noch ein weiterer Schritt durchgeführt werden. In diesem vorgelagerten Schritt wird der Docht geflochten.

Sofern der Docht nicht direkt im Anschluss an den Trocknungsschritt c) gewachst wird, wird der präparierte und getrocknete Docht im Anschluss an den Trocknungsschritt c) auf eine Vorrichtung, vorzugsweise eine Papierhülse aufgespult.

Gemäß einer bevorzugten Ausführungsform wird in Schritt a) die erfindungsgemäße Tränklösung eingesetzt. Die oben gemachten Angaben zur erfindungsgemäßen Tränklösung haben auch für diese bevorzugte Ausführungsform des erfindungsgemäßen Verfahrens Geltung.

Weitere Vorteile der Erfindung ergeben sich aus der nachfolgenden Beschreibung von bevorzugten Ausführungsbeispielen, die jedoch in keiner Weise als einschränkend zu verstehen sind. Alle Ausführungsformen der Erfindung können im Rahmen der Erfindung miteinander kombiniert werden.

### Ausführungsbeispiele

### Materialien

Ammoniumnitrat, Ammoniumsulfat, Natriumsulfat und Magnesiumsulfat-Heptahydrat wurden von der Firma VWR (Deutschland) bezogen.

Cernitrat wurde von der Firma Thermofisher (Belgien) bezogen.

Exolit AP420 und Exolit 855 wurden von der Firma Clariant Produkte (Deutschland) GmbH bezogen.

BYK-154 wurde von der Firma Krahn Chemie Deutschland GmbH bezogen.

EUCAM-Textil wurde von der Firma Endotherm Brandschutz (Saarbrücken, Deutschland) bezogen.

### Versuchsdurchführung

Es wurden acht Tränklösungen mit den in Tabelle 1 gezeigter Zusammensetzungen hergestellt. Alle Tränklösungen sind wässrige Lösungen.

**Tabelle 1: Borfreie Tränklösungen für Dochte**

| **Substanzen** | **1** | **2** | **3** | **4** | **5** | **6** | **7** | **8** | **9** |
|---|---|---|---|---|---|---|---|---|---|
| Wasser | 250,0 g | 250,0 g | 250,0 g | 250,0 g | 250,0 g | 250,0 g | 250,0 g | 250,0 g | 250,0g |
| Exolit AP420 | 2,0 g | 2,0 g | 2,0 g | 2,0 g | 2,0 g | 2,0 g | -- | -- | -- |
| Amoniumnitrat | 10,0 g | 7,0 g | 1,5 g | 10,0 g | 10,0 g | 10,0 g | -- | -- | -- |
| Amoniumsulfat | 10,0 g | 7,0 g | 1,5 g | 5,0 g | 5,0 g | 7,5 g | -- | -- | -- |
| Cernitrat | 2,0 g | 1,0 g | 0,5 g | 10,0 g | 1,3 g | 1,0 g | -- | 4,1 g | -- |
| EUCAM-Textil | -- | -- | -- | -- | -- | -- | 150,0 g | 312,5 g | -- |
| BYK-154 | -- | -- | -- | -- | -- | -- | 2,0 g | 4,1 g | -- |
| MgSO₄ * 7 H₂O | -- | -- | -- | -- | -- | -- | 2,0 g | 4,1 g | -- |
| Exolit 855 | -- | -- | -- | -- | -- | -- | -- | -- | 20,0g |

Das Dochtmaterial wurde für ca. 1 Sekunde in die erfindungsgemäße Tränklösung getaucht und danach manuell abgestreift. Anschließend wurden die Dochte bei Raumklima über Nacht hängend getrocknet.

Dochtwachs wurde auf 90°C erwärmt und, nachdem dieses vollständig aufgeschmolzen war, gerührt. Die Dochte wurden für ca. 2 Sekunden eingelegt bis keine Luftblasen mehr aufstiegen. Überschüssiges Wachs wurde manuell abgestreift.

Die erhaltenen Dochte wurden danach in Kerzenrohlinge eingefädelt und mit Überstand gerade abgeschnitten.

Der Docht, der mit einer Tränklösung gemäß Beispiel 1 präpariert wurde, wurde in einen Teelicht-Kerzenrohling aus Paraffin und einen Teelicht-Kerzenrohling aus einer Paraffin/Palmwachsmischung eingefädelt.

Der Docht, der mit einer Tränklösung gemäß Beispiel 2 präpariert wurde, wurde in einen Teelicht-Kerzenrohling aus Paraffin eingefädelt.

Der Docht, der mit einer Tränklösung gemäß Beispiel 3 präpariert wurde und aus einem ungebleichten Dochtgarn bestand, wurde in einen Teelicht-Kerzenrohling aus Paraffin eingefädelt.

Der Docht, der mit einer Tränklösung gemäß Beispiel 4 präpariert wurde, wurde in einen Duftkerzenrohling aus Paraffin mit 10% Duftanteil eingefädelt.

Der Docht, der mit einer Tränklösung gemäß Beispiel 5 präpariert wurde, wurde in einen Stumpenkerzenrohling aus Paraffin eingefädelt.

Der Docht, der mit einer Tränklösung gemäß Beispiel 6 präpariert wurde, wurde in einen Stumpenkerzenrohling aus Paraffin und in einen Stabkerzenrohling aus Paraffin eingefädelt.

Der Docht, der mit einer Tränklösung gemäß Beispiel 7 präpariert wurde, wurde in einen Stumpenkerzenrohling aus Stearin eingefädelt.

Der Docht, der mit einer Tränklösung gemäß Beispiel 8 präpariert wurde, wurde in einen Stumpenkerzenrohling aus Stearin und in einen Stumpenkerzenrohling mit einer Stearin/Palmwachsmischung eingefädelt.

Der Docht, der mit einer Tränklösung gemäß Beispiel 9 präpariert wurde, wurde in eine Kerze im Glas aus einer Mischung verschiedener Naturwachse eingefädelt.

Mit allen Dochten, die mit Tränklösungen gemäß den Beispielen 1 bis 9 getränkt worden waren, wurden Abbrennversuche durchgeführt.

Für die Brandversuche betrug die Umgebungstemperatur mindestens 15°C und es herrschte kein Luftzug.

Das Abbrennverhalten und die Krümmung des Dochtes wurde 1h nach Anzünden überprüft. Das Abbrennverhalten aller Dochte war gut und entsprach den RAL-GZ 041 Anforderungen. Die Dochte standen gerade aus dem Wachs und hatten eine Krümmung zwischen 45° und 90°.

## Patentansprüche

1. Borfreier Docht umfassend,
a) ein Dochtmaterial,
wobei das Dochtmaterial ausgewählt ist aus Baumwolle, Zellwolle, Zellulosefasern, Papiergarn, Leinengarn und/oder Kombinationen daraus;
b) wenigstens ein erstes Flammschutzmittel; und
c) wenigstens ein erstes Additiv, wobei das erste Additiv ausgewählt ist aus der Gruppe bestehend aus Ammoniumnitrat, Cernitrat, einem Polymer oder Kombinationen daraus,
wobei der Anteil an erstem Additiv 0,001 bis 4,0 Gew.% bezogen auf die Gesamtmenge des Dochts beträgt.

2. Borfreier Docht gemäß Anspruch 1,
wobei das wenigstens eine erste Additiv Ammoniumnitrat oder Cernitrat, bevorzugt Cernitrat ist; und/oder
wobei das wenigstens eine erste Additiv ein organisches Polymer ist; und/oder
wobei der Anteil an erstem Additiv 0,01 bis 4,0 Gew.% und bevorzugt, 0,1 bis 2,5 Gew.% bezogen auf die Gesamtmenge des Dochts beträgt.

3. Borfreier Docht gemäß Ansprüchen 1 oder 2 umfassend,
ein zweites Additiv,
wobei das zweite Additiv ein anorganisches Nitrat ist, bevorzugt ist das zweite Additiv ausgewählt aus der Gruppe bestehend aus Ammoniumnitrat oder Cernitrat, wobei das zweite Additiv vom ersten Additiv verschieden ist; und/oder
wobei das zweite Additiv Ammoniumnitrat ist, wobei das zweite Additiv vom ersten Additiv verschieden ist.

4. Borfreier Docht gemäß Ansprüchen 1 bis 3,
wobei der borfreie Docht ein anorganisches Sulfat, bevorzugt ein anorganisches Sulfat ausgewählt aus der Gruppe bestehend aus Lithiumsulfat, Berylliumsulfat, Natriumsulfat, Ammoniumsulfat, Aluminiumsulfat, Magnesiumsulfat, Kaliumsulfat und Calciumsulfat umfasst; oder
wobei der borfreie Docht ein anorganisches Sulfat, bevorzugt ein anorganisches Sulfat ausgewählt aus der Gruppe bestehend aus Lithiumsulfat, Berylliumsulfat, Natriumsulfat, Ammoniumsulfat, Aluminiumsulfat, Magnesiumsulfat, Kaliumsulfat und Calciumsulfat umfasst, wobei der Anteil an anorganischem Sulfat von 0,001 bis 10 Gew.%, bevorzugt 0,01 bis 5 Gew.% und bevorzugter 0,1 bis 2,5 Gew.% bezogen auf die Gesamtmenge des Dochts beträgt.

5. Borfreier Docht gemäß Ansprüchen 1 bis 4,
wobei das wenigstens eine Flammschutzmittel eine phosphorenthaltende anorganische Substanz, bevorzugt Polyphosphorsäure und/oder Polyphosphat, bevorzugter Ammonium-Polyphosphat ist.

6. Kerze umfassend einen Docht gemäß Ansprüchen 1 bis 5.

7. Kerze gemäß Anspruch 6,
wobei die Kerze aus Paraffin, Stearin tierischer und/oder pflanzlicher Herkunft, Bienenwachs, Palmwachs, Sojawachs, Fetten tierischer oder pflanzlicher Herkunft und/oder Kombinationen hieraus, hergestellt ist.

8. Verfahren zur Imprägnierung eines Dochts mit einer borfreien Tränklösung für einen Docht,
wobei die Tränklösung, ein Lösungsmittel, wenigstens ein erstes Flammschutzmittel und wenigstens ein erstes Additiv, wobei das erste Additiv ausgewählt ist aus der Gruppe bestehend aus Ammoniumnitrat, Cernitrat, einem Polymer oder Kombinationen daraus, und wobei der Anteil an erstem Additiv der borfreien Tränklösung 0,1 bis 10 Gew.%, bezogen auf die Gesamtmenge der Tränklösung beträgt, umfasst;
umfassend die Schritte
a) Durchführen des Dochtes durch die Tränklösung mit einer Geschwindigkeit von mindestens 100 m/min, bevorzugt 140 m/min und bevorzugter 180 m/min, wobei die Verweilzeit des Dochtes in der Tränklösung wenigstens 0,5 Sekunden oder mehr, bevorzugt 0,7 Sekunden oder mehr und bevorzugter 0,8 Sekunden oder mehr beträgt;
b) Aufwickeln des getränkten Dochtes auf eine Trockenvorrichtung.

9. Verfahren gemäß Anspruch 8,
wobei in Schritt b) die relative Luftfeuchtigkeit zwischen 5 und 25%, bevorzugt 10 und 20% und bevorzugter 10 und 15% beträgt.

10. Verfahren gemäß den Ansprüchen 8 oder 9,
wobei das wenigstens eine erste Additiv der borfreien Tränklösung Ammoniumnitrat oder Cernitrat, bevorzugt Cernitrat ist; und/oder
wobei das wenigstens eine erste Additiv der borfreien Tränklösung ein organisches Polymer ist; und/oder
wobei das Lösungsmittel der borfreien Tränklösung Wasser ist.

11. Verfahren gemäß den Ansprüchen 8 bis 10,
wobei die borfreie Tränklösung ein zweites Additiv umfasst,
wobei das zweite Additiv der borfreien Tränklösung ein anorganisches Nitrat ist, bevorzugt ist das zweite Additiv ausgewählt aus der Gruppe bestehend aus Ammoniumnitrat oder Cernitrat, wobei das zweite Additiv vom ersten Additiv verschieden ist; und/oder
wobei das zweite Additiv der borfreien Tränklösung Ammoniumnitrat ist, wobei das zweite Additiv vom ersten Additiv verschieden ist.

12. Verfahren gemäß den Ansprüchen 8 bis 11,
wobei die borfreie Tränklösung ein anorganisches Sulfat, bevorzugt ein anorganisches Sulfat ausgewählt aus der Gruppe bestehend aus Lithiumsulfat, Berylliumsulfat, Natriumsulfat, Ammoniumsulfat, Aluminiumsulfat, Magnesiumsulfat, Kaliumsulfat und Calciumsulfat umfasst; oder
wobei die borfreie Tränklösung ein anorganisches Sulfat, bevorzugt ein anorganisches Sulfat ausgewählt aus der Gruppe bestehend aus Lithiumsulfat, Berylliumsulfat, Natriumsulfat, Ammoniumsulfat, Aluminiumsulfat, Magnesiumsulfat, Kaliumsulfat und Calciumsulfat umfasst, wobei der Anteil an anorganischem Sulfat von 0,1 bis 20 Gew.%, bevorzugt 0,3 bis 9 Gew.% und bevorzugter 0,4 bis 4,0 Gew.% bezogen auf die Gesamtmenge der Tränklösung beträgt.

13. Verfahren gemäß den Ansprüchen 8 bis 12,
wobei das wenigstens eine Flammschutzmittel der borfreien Tränklösung eine phosphorenthaltende anorganische Substanz, bevorzugt Polyphosphorsäure und/oder Polyphosphat, bevorzugter Ammonium-Polyphosphat ist; und/oder
wobei der Anteil an erstem Additiv der borfreien Tränklösung 0,1 bis 4,0 Gew.% und bevorzugt 0,2 bis 3,6 Gew.% bezogen auf die Gesamtmenge der Tränklösung beträgt.

## Claims

1. A boron-free wick comprising
a) a wick material,
wherein the wick material is selected from cotton, rayon, cellulose fibers, paper yarn, flax yarn and/or combinations thereof;
b) at least one first flame retardant; and
c) at least a first additive, wherein the first additive is selected from the group consisting of ammonium nitrate, cerium nitrate, a polymer or combinations thereof,
wherein the fraction of first additive is 0.001 to 4.0 wt.-% based on the total quantity of the wick.

2. The boron free wick according to Claim 1,
wherein the at least one first additive is ammonium nitrate or cerium nitrate, preferably cerium nitrate; and/or
wherein the at least one first additive is an organic polymer, and/or
wherein the fraction of the first additive is 0.01 to 4.0 wt% and preferably 0.1 to 2.5 wt% based on the total quantity of the wick.

3. The boron free wick according to Claim 1 or 2, comprising a second additive,
wherein the second additive is an inorganic nitrate, the second additive is preferably selected from the group consisting of ammonium nitrate or cerium nitrate, wherein the second additive is different from the first additive, and/or
wherein the second additive is ammonium nitrate, wherein the second additive is different from the first additive.

4. The boron free wick according to Claims 1 to 3,
wherein the boron-free wick contains an inorganic sulfate,
preferably an inorganic sulfate selected from the group consisting of lithium sulfate, beryllium sulfate, sodium sulfate, ammonium sulfate, aluminum sulfate, magnesium sulfate, potassium sulfate and calcium sulfate; or
wherein the boron-free wick contains an inorganic sulfate, preferably an inorganic sulfate selected from the group consisting of lithium sulfate, beryllium sulfate, sodium sulfate, ammonium sulfate, aluminum sulfate, magnesium sulfate, potassium sulfate and calcium sulfate, wherein the fraction of inorganic sulfate is from 0.001 to 10 wt%, preferably 0.01 to 5 wt% and more preferably 0.1 to 2.5 wt% based on the total quantity of the wick.

5. The boron free wick according to Claims 1 to 4,
wherein the at least one flame retardant is a phosphorus-containing inorganic substance, preferably polyphosphoric acid and/or polyphosphate, more preferably ammonium polyphosphate.

6. A candle comprising a wick according to Claims 1 to 5.

7. A candle according to claim 6,
wherein the candle is made of paraffin, stearin of animal and/ or vegetable origin, beeswax, palm wax, soy wax, fats of animal or vegetable origin and/or combinations thereof.

8. A method for impregnating a wick with a boron-free impregnation solution for a wick,
wherein the impregnation solution comprises a solvent, a first flame retardant and at least one first additive, wherein the first additive is selected from the group consisting of ammonium nitrate, cerium nitrate, a polymer or combinations thereof, and in which the fraction of a first additive to the boron-free impregnating solution is 0.1 to 10 wt%, based on the total amount of the impregnation solution;
comprising the steps of
a) passing the wick through the impregnation solution at a speed of at least 100 m/min, preferably 140 m/min and more preferably 180 m/min, wherein the residence time of the wick in the impregnation solution amounts to at least 0.5 seconds or more, preferably 0.7 seconds or more and more preferably 0.8 seconds or more;
b) winding the impregnated wick onto a drying device.

9. The method according to claim 8,
wherein in step b) the relative humidity is between 5 and 25%, preferably 10 and 20% and more preferably 10 and 15%.

10. The method according to claims 8 or 9,
wherein the at least one first additive to the boron-free impregnation solution is ammonium nitrate or cerium nitrate, preferably cerium nitrate; and/or
wherein the at least one first additive to the boron-free impregnation solution is an organic polymer; and/or
wherein the solvent for the boron-free impregnation solution is water.

11. The method according to claims 8 to 10,
wherein the boron-free impregnation solution contains a second additive,
wherein the second additive to the boron-free impregnation solution is an inorganic nitrate, preferably the second additive is selected from the group consisting of ammonium nitrate or cerium nitrate, wherein the second additive is different from the first additive; and/or
wherein the second additive to the boron-free impregnation solution is ammonium nitrate, wherein the second additive is different from the first additive.

12. The method according to claims 8 to 11,
wherein the boron-free impregnation solution contains an inorganic sulfate, preferably an inorganic sulfate selected from the group consisting of lithium sulfate, beryllium sulfate, sodium sulfate, ammonium sulfate, aluminum sulfate, magnesium sulfate, potassium sulfate and calcium sulfate; or
wherein the boron-free impregnation solution contains an inorganic sulfate, preferably an inorganic sulfate selected from the group consisting of lithium sulfate, beryllium sulfate, sodium sulfate, ammonium sulfate, aluminum sulfate, magnesium sulfate, potassium sulfate and calcium sulfate, wherein the fraction of inorganic sulfate is from 0.1 to 20 wt%, preferably from 0.3 to 9 wt% and more preferably 0.4 to 4.0 wt% based on the total quantity of the impregnation solution.

13. The method according to claims 8 to 12,
wherein the at least one flame retardant of the boron-free impregnation solution is a phosphorus-containing inorganic substance, preferably polyphosphoric acid and/or polyphosphate, preferably ammonium polyphosphate; and/or
wherein the fraction of the first additive to the boron-free impregnation solution is 0.1 to 4.0 wt% and preferably 0.2 to 3.6 wt% based on the total quantity of the impregnation solution.

## Revendications

1. Mèche sans bore comprenant,
a) un matériau à effet de mèche, dans lequel le matériau à effet de mèche est choisi parmi le coton, la fibranne, les fibres de cellulose, le fil de papier, le fil de lin et/ou des combinaisons de ceux-ci ;
b) au moins un premier ignifugeant ; et
c) au moins un premier additif, dans lequel le premier additif est choisi dans le groupe constitué du nitrate d'ammonium, du nitrate de cérium, d'un polymère ou de combinaisons de ceux-ci, dans lequel la proportion du premier additif est de 0,001 à 4,0 % en poids par rapport à la quantité totale de la mèche.

2. Mèche sans bore selon la revendication 1,
dans lequel l'au moins un premier additif est du nitrate d'ammonium ou du nitrate de cérium, de préférence du nitrate de cérium ; et/ou
dans lequel l'au moins un premier additif est un polymère organique ; et/ou
dans lequel la proportion du premier additif est de 0,01 à 4,0 % en poids et de préférence de 0,1 à 2,5 % en poids par rapport à la quantité totale de la mèche.

3. Mèche sans bore selon les revendications 1 ou 2, comprenant un second additif,
dans lequel le second additif est un nitrate inorganique, le second additif est de préférence choisi dans le groupe constitué du nitrate d'ammonium ou du nitrate de cérium, dans lequel le second additif est différent du premier additif ; et/ou
dans lequel le second additif est du nitrate d'ammonium, dans lequel le second additif est différent du premier additif.

4. Mèche sans bore selon les revendications 1 à 3,
dans lequel la mèche sans bore comprend un sulfate inorganique, de préférence un sulfate inorganique choisi dans le groupe constitué du sulfate de lithium, du sulfate de béryllium, du sulfate de sodium, du sulfate d'ammonium, du sulfate d'aluminium, du sulfate de magnésium, du sulfate de potassium et du sulfate de calcium ; ou
dans lequel la mèche sans bore comprend un sulfate inorganique, de préférence un sulfate inorganique choisi dans le groupe constitué du sulfate de lithium, du sulfate de béryllium, du sulfate de sodium, du sulfate d'ammonium, du sulfate d'aluminium, du sulfate de magnésium, du sulfate de potassium et du sulfate de calcium, dans lequel la proportion de sulfate inorganique est de 0,001 à 10 % en poids, de préférence de 0,01 à 5 % en poids et de manière davantage préférée de 0,1 à 2,5 % en poids par rapport à la quantité totale de la mèche.

5. Mèche sans bore selon les revendications 1 à 4,
dans lequel l'au moins un ignifugeant est une substance inorganique contenant du phosphore, de préférence de l'acide polyphosphorique et/ou un polyphosphate, de manière davantage préférée du polyphosphate d'ammonium.

6. Bougie comprenant une mèche selon les revendications 1 à 5.

7. Bougie selon la revendication 6,
dans laquelle la bougie est fabriquée à partir de paraffine, de stéarine d'origine animale et/ou végétale, de cire d'abeille, de cire de palme, de cire de soja, de graisses d'origine animale ou végétale et/ou de combinaisons de celles-ci.

8. Procédé d'imprégnation d'une mèche avec une solution d'imprégnation sans bore pour mèche,
dans lequel la solution d'imprégnation, un solvant, au moins un premier ignifugeant et au moins un premier additif, dans lequel le premier additif est choisi dans le groupe constitué du nitrate d'ammonium, du nitrate de cérium, d'un polymère ou de combinaisons de ceux-ci, et dans lequel la proportion du premier additif dans la solution d'imprégnation sans bore est de 0,1 à 10 % en poids par rapport à la quantité totale de la solution d'imprégnation ;
comprenant les étapes
a) de passage de la mèche à travers la solution d'imprégnation à une vitesse d'au moins 100 m/min, de préférence 140 m/min et de manière davantage préférée 180 m/min, dans lequel le temps de séjour de la mèche dans la solution d'imprégnation est d'au moins 0,5 seconde ou plus, de préférence 0,7 seconde ou plus, et de manière davantage préférée 0,8 seconde ou plus ;
b) d'enroulement de la mèche imbibée sur un appareil de séchage.

9. Procédé selon la revendication 8,
dans lequel, à l'étape b), l'humidité relative est comprise entre 5 et 25 %, de préférence entre 10 et 20 % et de manière davantage préférée entre 10 et 15 %.

10. Procédé selon les revendications 8 ou 9,
dans lequel l'au moins un premier additif de la solution d'imprégnation sans bore est du nitrate d'ammonium ou du nitrate de cérium, de préférence du nitrate de cérium ; et/ou
dans lequel l'au moins un premier additif de la solution d'imprégnation sans bore est un polymère organique ; et/ou
dans lequel le solvant de la solution d'imprégnation sans bore est l'eau.

11. Procédé selon les revendications 8 à 10,
dans lequel la solution d'imprégnation sans bore comprend un second additif,
dans lequel le second additif de la solution d'imprégnation sans bore est un nitrate inorganique, le second additif est de préférence choisi dans le groupe constitué du nitrate d'ammonium ou du nitrate de cérium, dans lequel le second additif est différent du premier additif ; et/ou
dans lequel le second additif de la solution d'imprégnation sans bore est du nitrate d'ammonium, dans lequel le second additif est différent du premier additif.

12. Procédé selon les revendications 8 à 11,
dans lequel la solution d'imprégnation sans bore comprend un sulfate inorganique, de préférence un sulfate inorganique choisi dans le groupe constitué du sulfate de lithium, du sulfate de béryllium, du sulfate de sodium, du sulfate d'ammonium, du sulfate d'aluminium, du sulfate de magnésium, du sulfate de potassium et du sulfate de calcium ; ou
dans lequel la solution d'imprégnation sans bore comprend un sulfate inorganique, de préférence un sulfate inorganique choisi dans le groupe constitué du sulfate de lithium, du sulfate de béryllium, du sulfate de sodium, du sulfate d'ammonium, du sulfate d'aluminium, du sulfate de magnésium, du sulfate de potassium et du sulfate de calcium, dans lequel la proportion de sulfate inorganique est de 0,1 à 20 % en poids, de préférence de 0,3 à 9 % en poids et de manière davantage préférée de 0,4 à 4,0 % en poids par rapport à la quantité totale de la solution d'imprégnation.

13. Procédé selon les revendications 8 à 12,
dans lequel l'au moins un ignifugeant est une solution d'imprégnation sans bore contenant du phosphore, de préférence de l'acide polyphosphorique et/ou un polyphosphate, de manière davantage préférée du polyphosphate d'ammonium ; et/ou
dans lequel la proportion du premier additif dans la solution d'imprégnation sans bore est de 0,1 à 4,0 % en poids et de préférence de 0,2 à 3,6 % en poids par rapport à la quantité totale de la solution d'imprégnation.
